# EUROPEAN PATENT SPECIFICATION

(11) **EP 4 481 869 B1**
(45) Date of publication and mention of the grant of the patent: **15.07.2026**
(21) Application number: 23756630.2
(22) Date of filing: 15.02.2023
(51) Int. Cl.: H01M 10/04, G01N 21/88, H01M 50/531, H01M 10/42, G01N 21/95

(54) **APPARATUS FOR INSPECTING UNIT CELL**
EINHEITSZELLENINSPEKTIONSVORRICHTUNG
DISPOSITIF D'INSPECTION DE CELLULE UNITAIRE

(30) Priority: 16.02.2022 KR 20220020455; 14.02.2023 KR 20230019638
(43) Date of publication of application: 25.12.2024
(73) Proprietor: LG Energy Solution, Ltd., Seoul 07335 (KR)
(72) Inventor: KWON, Jong Ha, Daejeon 34122 (KR); LEE, Jong Myung, Daejeon 34122 (KR); LEE, Kwan Woo, Daejeon 34122 (KR); KANG, Hoon Seok, Daejeon 34122 (KR); CHOI, Hyo Sun, Daejeon 34122 (KR)
(74) Representative: Goddar, Heinz J.
(86) International application number: PCT/KR2023/002218
(87) International publication number: WO 2023/158218

(56) References cited:
- EP-A1- 4 276 958
- KR-A- 20200 089 173
- KR-A- 20210 098 538
- KR-A- 20220 011 029
- KR-B1- 101 981 010
- KR-B1- 102 090 292
- KR-B1- 102 133 915
- KR-B1- 102 167 118
- US-A1- 2020 067 051

## Description

### TECHNICAL FIELD

The present invention relates to an apparatus for inspecting a unit cell.

KR 102 133 915 B1 relates to a defective detection system and a defective detection method of an electrode assembly.

US 2020/0067051 A1 relates to a method for producing a mono-cell formed by alternately stacking separators and electrodes.

KR 2020 0089173 A relates to a unit cell failure determination apparatus and method.

### BACKGROUND ART

In general, secondary batteries refer to batteries, which are chargeable and dischargeable unlike non-rechargeable primary batteries, and are widely used in electronic devices such as mobile phones, notebook computers and camcorders, electric vehicles, or the like. In particular, lithium secondary batteries have a larger capacity and a higher energy density than nickel-cadmium batteries or nickel-hydrogen batteries, and thus utilization thereof is on a rapidly increasing trend.

According to the shape of a battery case, the secondary batteries may be classified into a cylindrical type battery and a prismatic type battery, each of which has an electrode assembly embedded in a cylindrical or prismatic metal can, a pouch type battery having an electrode assembly embedded in a pouch type case made of an aluminum laminate sheet, and so on.

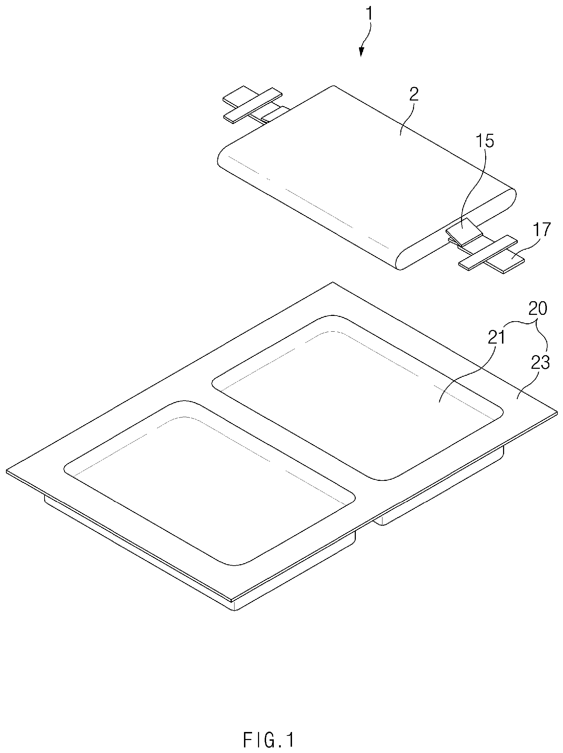

FIG. 1 is a view illustrating an example of a pouch type secondary battery. A pouch type secondary battery 1 includes an electrode assembly 2, in which an electrode and a separator are provided to be alternately stacked, and a pouch 20 in which the electrode assembly 2 is accommodated. Each of electrode tabs 15 may be connected to the electrode of the electrode assembly 2. The electrode tabs 15 may be welded to each other in a predetermined area and then connected to an electrode lead 17. The pouch 20 includes a cup part 21 having a recessed shape for accommodating the electrode assembly 2. The cup part 21 of the pouch 20 may be provided in one or two. FIG. 1 illustrates an example of the pouch 20 including a left cup part and a right cup part. A circumferential part 23 (terrace) is formed around a circumference of the cup part 21 by sealing.

It may be optically inspected during manufacturing of the electrode assembly 2 whether a unit cell constituting the electrode assembly 2 is normal (e.g., whether the electrode tab of the unit cell is folded). This inspection may be performed by photographing the unit cell and then analyzing a photographed image. However, when an object (e.g., the electrode tab of the unit cell) to be inspected for abnormality is blocked by other objects during obtaining of the photographed image of the unit cell, it may be difficult to analyze the obtained image to determine whether there is an abnormality. For example, when a roller disposed at a lower side of the unit cell for transfer of the unit cell blocks the electrode tab of the unit cell, it may be difficult to accurately obtain an image of the electrode tab and accordingly, it may be difficult to properly determine through the obtained image whether the electrode tab is normal.

### DISCLOSURE OF THE INVENTION

### TECHNICAL PROBLEM

An object of the present invention is to provide an apparatus for inspecting a unit cell, which is capable of preventing an object to be inspected of the unit cell from being photographed in a state of being blocked by other objects during obtaining of a photographed image of the unit cell for inspection of the unit cell, to accurately determine whether the object to be inspected is normal.

### TECHNICAL SOLUTION

In an embodiment, an apparatus for inspecting a unit cell according to claim 1 is provided.

In another embodiment, the region of interest may be set based on a region, in which the electrode tab is configured to be disposed at the inspection position during a normal transfer of the unit cell, and a region in which the electrode tab is configured to be disposed at the inspection position during a misaligned transfer of the unit cell.

In still another embodiment, the region of interest may be set to include a region, which extends from a distal end of the separator, at which the electrode tab starts to be exposed when the electrode tab is disposed in a longitudinal direction, which is particular to the transfer direction, of the adjacent transfer roller, to the outside of the separator by a first distance in the longitudinal direction, and a region which extends from the distal end to an inside of the separator by a second distance in a direction opposite to the longitudinal direction.

In still another embodiment, the first distance may be a length defined in the longitudinal direction and be set based on an exposure length of the electrode tab exposed from the distal end of the separator to the outside of the separator.

In still another embodiment, the first distance may be in a range of 15 mm to 30 mm.

In still another embodiment, the second distance may be a length defined in the longitudinal direction and be set based on an exposure length of the electrode tab exposed from the distal end of the separator to the outside of the separator, and a predetermined extra distance.

In still another embodiment, the second distance may be in a range of 15 mm to 30 mm.

In still another embodiment, the first distance may be less than or equal to the second distance.

In still another embodiment, the adjacent transfer roller may be provided to have a length that does not invade the region of interest.

In still another embodiment, the optical inspection part may include a lamp, which is configured to emit light toward the unit cell to be inspected and disposed at an upper side of the unit cell to be inspected, and a camera which is configured to photograph the unit cell to be inspected in a state in which the light is emitted by the lamp, and disposed at a lower side of the unit cell to be inspected.

In still another embodiment, the optical inspection part may further include a reflecting plate that changes a photographing path of the camera to a direction perpendicular to the photographing path.

In still another embodiment, the electrode tab may include a positive electrode tab and a negative electrode tab extending from a positive electrode and a negative electrode, which are one of the electrodes and the other thereof, in the longitudinal direction, which perpendicularly crosses the transfer direction, of the adjacent transfer roller and a direction opposite thereto, respectively. The optical inspection part may include a positive electrode tab inspection part, which optically inspects the positive electrode tab by setting, as the region of interest, a region including a region in which at least a portion of the positive electrode tab is configured to be disposed at the inspection position, and a negative electrode tab inspection part which optically inspects the negative electrode tab by setting, as the region of interest, a region including a region in which at least a portion of the negative electrode tab is configured to be disposed at the inspection position.

In still another embodiment, a gap between the adjacent transfer roller and another transfer roller disposed to be most adjacent to the adjacent transfer roller may be smaller than a width of the unit cell defined in the transfer direction.

### ADVANTAGEOUS EFFECTS

According to the present invention, as the adjacent transfer roller does not invade the region of interest, the problem may be solved in which due to the interference of the transfer roller, the optical inspection part is incapable of determining or incorrectly determines whether the electrode tab is normal, when processing the region of interest of the obtained image.

### BRIEF DESCRIPTION OF THE DRAWINGS

FIG. 1 is a view illustrating an example of a pouch type secondary battery.
FIG. 2 is a view illustrating an apparatus for inspecting a unit cell according to Embodiment 1 of the present invention.
FIG. 3 is a plan view of the inspecting apparatus in FIG. 2 when viewed from an upper side.
FIG. 4 is a view of a unit cell to be inspected disposed at an inspection position when viewed from a bottom, and is a view illustrating an example of a case in which a transfer roller blocks an electrode tab in a region of interest.
FIG. 5 is a view of a unit cell to be inspected disposed at an inspection position when viewed from a bottom, and is a view illustrating an example of a case in which a transfer roller does not block an electrode tab in a region of interest.
FIG. 6 is a view of a unit cell to be inspected disposed at an inspection position when viewed from a bottom, and is a view illustrating an example of a case in which a separating film is meanderingly transferred.
FIG. 7 is a view specifically illustrating an optical inspection part of the inspecting apparatus in FIG. 2.
FIG. 8 is a view illustrating an apparatus for inspecting a unit cell according to Embodiment 2 of the present invention.

### MODE FOR CARRYING OUT THE INVENTION

Hereinafter, preferred embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Embodiment 1

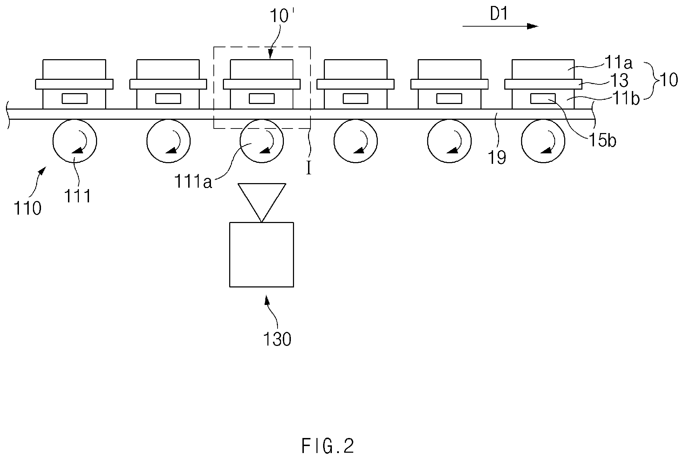

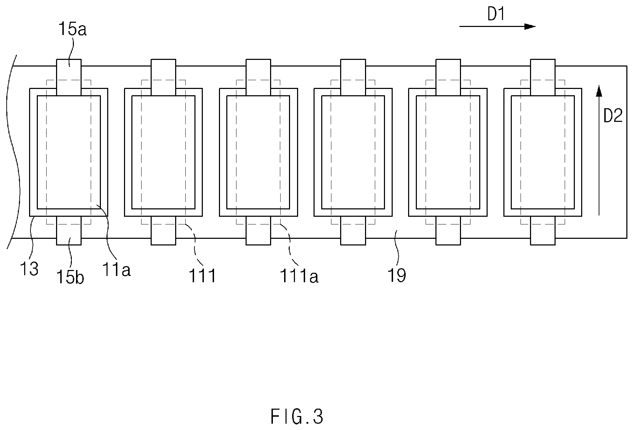

FIG. 2 is a view illustrating an apparatus for inspecting a unit cell according to Embodiment 1 of the present invention. FIG. 3 is a plan view of the inspecting apparatus in FIG. 2 when viewed from an upper side. The apparatus according to Embodiment 1 of the present invention is an apparatus for inspecting a unit cell 10, and, for example, may be an apparatus for inspecting electrode tabs 15a and 15b of the unit cell 10. The inspecting apparatus according to this embodiment may include a transfer part 110 for transferring the unit cell 10, and an optical inspection part 130 for inspecting the unit cell 10.

The transfer part 110 may be configured to transfer the unit cells 10 in a predetermined transfer direction D1. For example, the transfer part 110 may include a belt conveyor (not shown) for transferring the unit cells 10. The belt conveyor may include a driving roller (not shown) that supplies driving power, and an annular belt (not shown) that is circulated by the driving roller. The unit cells 10 may be seated on and transferred by a belt circulated by the driving roller.

As illustrated in FIG. 2, the transfer part 110 may be implemented in a manner of transferring a separating film 19. The electrode assembly 2 (see FIG. 1) constituting the battery may be configured in various types. For example, the electrode assembly 2 may be configured in a stack and folding type. The stack and folding type electrode assembly 2 may be manufactured by using the separating film 19 to fold unit cells 10 (full-cells or bi-cells) that are provided so that electrodes 11a and 11b and a separator 13 are stacked according to a certain rule. The transfer part 110 may transfer the separating film 19 to transfer the unit cells 10 seated on the separating film 19 (see FIG. 3). To this end, the transfer part 110 may include the driving roller (not shown) for unwinding the separating film 19 from a roller (not shown) on which the separating film 19 is wound. As the separating film 19 also serves as a separator, hereinafter both the separating film 19 and the separator 13 included in the unit cell 10 may be referred to as separators. For reference, the inspecting apparatus according to this embodiment may be disposed in front of a folding device or as a portion of the folding device.

The transfer part 110 may include a plurality of transfer rollers 111 arranged in a transfer direction D1. The transfer rollers 111 may support the separating film 19 during the transfer of the separating film 19. To this end, the transfer rollers 111 may be disposed at a lower side of the separating film 19. The transfer rollers 111 may be idle rollers to which driving power is not supplied.

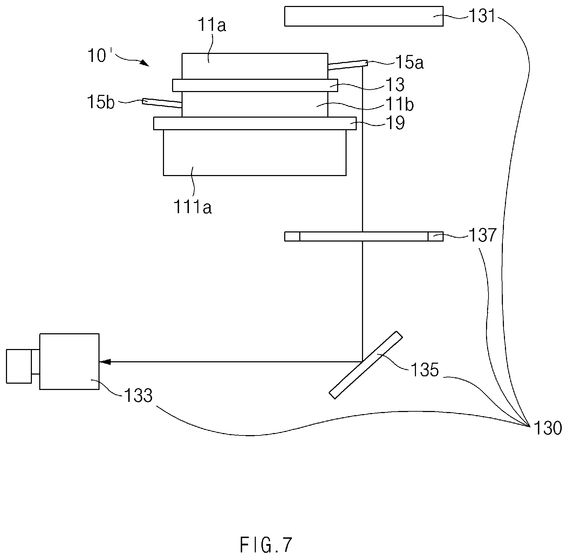

The optical inspection part 130 may be configured to optically sense a unit cell 10' (see FIG. 2) to be inspected. The optical inspection part 130 may be configured to capture and process an image of the unit cell 10' to be inspected so as to inspect whether the unit cell 10' to be inspected is normal. To this end, the optical inspection part 130 may include a camera 133 (see FIG. 7), for example, a CCD camera, for photographing the unit cell 10' to be inspected. Here, the unit cell 10' to be inspected may be a unit cell 10 that is disposed at a predetermined inspection position I (see FIG. 2) among the plurality of unit cells 10 transferred by the transfer part 110. The inspection position I may be a position at which the unit cell 10 is photographable by the camera 133 of the optical inspection part 130.

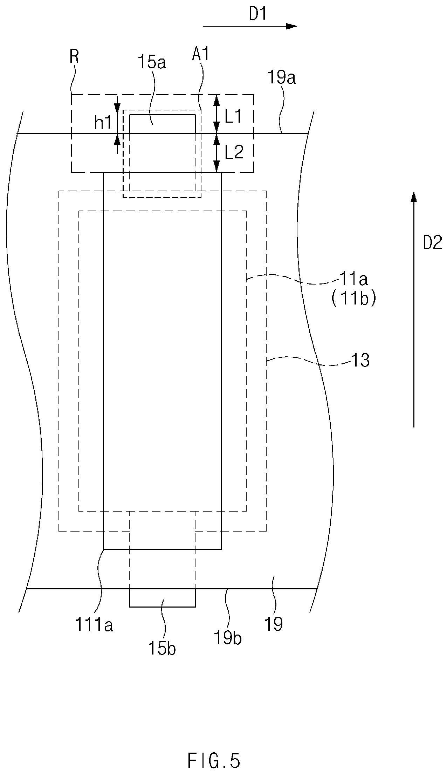

The optical inspection part 130 may set, as a region of interest (ROI) R (FIG. 5), a region including a region in which the electrode tabs 15a and 15b are disposed at the inspection position I. The region of interest R may be a region, which requires processing (image processing) for determining whether there is an abnormality, of the image photographed by the camera 133 of the optical inspection part 130. As the optical inspection part 130 sets, as the region of interest R, the region including the region in which the electrode tabs 15a and 15b are disposed at the inspection position I, the electrode tabs 15a and 15b may be inspected for an abnormality. When only a portion of each of the electrode tabs 15a and 15b is available for determining whether there is an abnormality, the region of interest R may be set to include a region in which the portion of each of the electrode tabs 15a and 15b is disposed. Here, the electrode tabs 15a and 15b may extend from the electrodes 11a and 11b, respectively, and be provided in the unit cell 10 to be exposed to the outside of the separator 13 that separates the electrodes 11a and 11b from each other. For example, FIG. 3 illustrates an example of the electrode tabs 15a and 15b that are exposed to the outside of the separator 13 of the unit cell 10 and also exposed to the outside of the separating film 19. For reference, as an example in FIG. 5 to be described later, the region of interest R is set to include a portion of one electrode tab 15a of the two electrode tabs 15a and 15b.

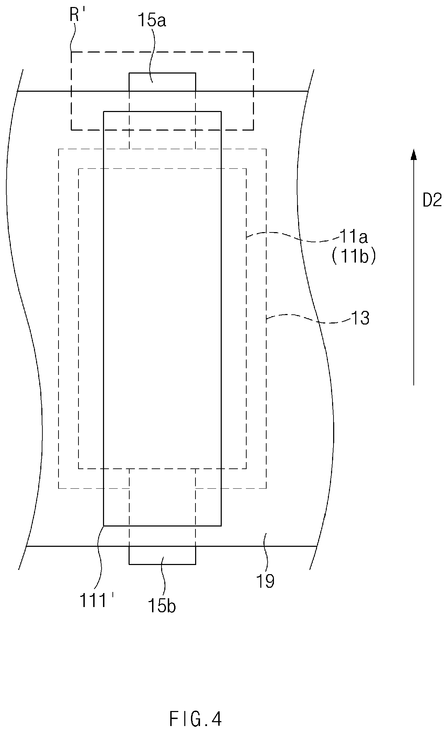

When the optical inspection part 130 photographs the unit cell 10' to be inspected, a transfer roller 111' of the transfer part 110 may interfere with the photographing of the optical inspection part 130. For example, the optical inspection part 130 may photograph the unit cell 10' to be inspected at a lower side of the unit cell 10' to be inspected, and, as illustrated in FIG. 4, when the transfer roller 111' is provided to be elongated in a longitudinal direction D2 of the transfer roller 111', the transfer roller 111' may block a portion of the electrode tab 15a in a region of interest R' during the photographing of the optical inspection part 130. Each of the electrode tabs 15a and 15b may be folded inward to the inside of the separating film 19 for reasons such as collision with other portions during the transfer, and when the transfer roller 111' blocks the electrode tab 15a in the region of interest R', it may be difficult for the optical inspection part 130 to properly obtain the image of the electrode tab 15a folded inward to the inside of the separating film 19. These problems caused by blocking (or overlapping) may further occur during the meandering transfer to be described later. For example, this is because a degree to which the transfer roller blocks the region of interest may increase due to the meandering transfer compared to a case of the normal transfer. FIG. 4 is a view of the unit cell to be inspected disposed at the inspection position when viewed from a bottom, and is a view illustrating an example of a case in which the transfer roller blocks the electrode tab in the region of interest.

In the apparatus for inspecting the unit cell according to this embodiment, in order to solve the above problems, an adjacent transfer roller 111a that is the transfer roller 111, which is disposed to be adjacent to the region of interest R among the transfer rollers 111, may be provided to non-overlap the region of interest R as illustrated in FIG. 5. For example, the adjacent transfer roller 111a may be provided to have a length that does not invade the region of interest R. The length of the transfer roller 111a in FIG. 5 may be less than a length of the transfer roller 111' in FIG. 4. For example, when the electrode tabs 15a and 15b are provided to be exposed in the longitudinal direction D2 of the adjacent transfer roller 111a and a direction opposite thereto, respectively (and when two regions of interest are set to correspond to the electrode tabs, respectively, as in Embodiment 2 to be described later), the length of the adjacent transfer roller 111a in FIG. 5 may be less than a length of the transfer roller 111' in FIG. 4 by 60 mm. FIG. 5 is a view of a unit cell to be inspected disposed at an inspection position when viewed from a bottom, and is a view illustrating an example of a case in which a transfer roller does not block an electrode tab in a region of interest. For reference, whether to overlap may be determined in a stacking direction of the electrode and the separator or a direction perpendicularly crossing the separating film (an upward and downward direction in FIG. 2).

As the adjacent transfer roller 111a does not invade the region of interest R, the apparatus for inspecting the unit cell according to this embodiment may solve the problem that due to an interference of the transfer roller 111, the optical inspection part 130 is incapable of determining or incorrectly determines whether the electrode tabs 15a and 15b are normal, when processing the region of interest R of the obtained image.

In this embodiment, the adjacent transfer roller 111a is disposed to at least partially overlap the unit cell 10' to be inspected, which is disposed at the inspection position **I,** in order to solve the following problems. FIG. 5 illustrates an example of the adjacent transfer roller 111a that partially overlaps the electrodes 11a and 11b and the separator 13 of the unit cell 10' to be inspected.

The separating film 19 is prone to vertically sagging downward during the process. Pulling of the separating film may be interrupted during a folding process in the manufacturing of the stack and folding type electrode assembly (e.g., when one electrode assembly is completed and then folding of a subsequent electrode assembly is prepared). When this interruption occurs, tension applied to the separating film is decreased and thus, the separating film is prone to sagging downward. Here, when the supply of the separating film continues in the upstream of the inspecting apparatus, this sagging may further occur. In addition, when the unit cell is disposed on the separating film, the sagging of the separating film may further occur due to the weight of the unit cell.

When this sagging occurs, the photographed image may be distorted so that an object to be inspected is not accurately inspected. In addition, deformation such as wrinkles, may occur in the electrode assembly. In the photographed image, the separator may appear to be a bright color, and the electrode may appear to be a dark color. Thus, when a change from the dark color to the bright color is recognized (to this end, a trigger sensor is generally used), this unit cell may be recognized as passing (or arriving) and starting the photographing (after a predetermined time) may be considered. However, when the sagging of the separating film occurs, a problem may occur also in this recognition to lead to a problem of a time point of starting the photographing.

In order to solve these problems, i.e., in order to prevent the sagging of the separating film 19, the adjacent transfer roller 111a according of this embodiment is provided to be disposed to at least partially overlap the unit cell 10' to be inspected to support the separating film 19 as illustrated in FIG. 5. A gap between the transfer rollers 111 may be set to be small in order to support the separating film 19. For example, a gap between the adjacent transfer roller 111a and another transfer roller 111 (or another adjacent transfer roller) disposed to be most adjacent to the adjacent transfer roller 111a may be smaller than a width of the unit cell defined in the transfer direction D1 (e.g., a width in a left and right direction of the electrode in FIG. 5). Accordingly, an area of the separating film 19, which is not supported by the transfer roller, may be minimized. Alternatively, in order to support the separating film 19, the adjacent transfer roller 111a may have the maximum length (see FIG. 5) non-overlapping the region of interest (or spaced a predetermined extra distance from the region of interest).

The apparatus for inspecting the unit cell according to this embodiment may achieve both the prevention of the sagging of the separating film and the prevention of the interference of the adjacent transfer roller to the photographed image as described above.

The region of interest R may be set as follows.

First, the region of interest R may be set in consideration of an area A1 in which the electrode tab 15a is disposed at the inspection position I (see FIG. 2) during normal transfer of the unit cell 10 as illustrated in FIG. 5. The normal transfer refers to a case in which the separating film 19 is transferred along a predetermined path, and may be contrasted with meandering transfer that is a case in which the separating film 19 is transferred to deviate from the predetermined path. As illustrated in FIG. 5, the electrode tab 15a may be disposed at the area A1 of the inspection position I during the normal transfer.

However, the optical inspection part 130 may determine, as an occurrence of abnormality in the electrode tab 15a, cases such as a case, in which a portion of the electrode tab 15a, which is exposed to the outside of the separating film 19, is folded to the outside of the separating film 19, or a case in which the portion of the electrode tab 15a, which is exposed to the outside of the separating film 19, is folded inward to the inside of the separating film 19. For such a determination, the region of interest R may be set to include both a region, in which the portion of the electrode tab 15a, which is exposed to the outside of the separating film 19, is disposed, and a region in which, when the portion of the electrode tab 15a, which is exposed to the outside of the separating film 19, is folded inward to the inside of the separating film 19, the portion folded inward is disposed.

Second, the region of interest R may be set in consideration of at least one of a first distance L1 or a second distance L2, which will be described later. When the electrode tab 15a is disposed in a longitudinal direction D2 of the adjacent transfer roller 111a, which perpendicularly crosses the transfer direction D1 of the unit cell 10, the electrode tab 15a starts to be exposed from a distal end 19a of the separating film 19 in the longitudinal direction D2 to the outside of the separating film 19. The first distance L1 is a distance set from the distal end 19a of the separating film 19 in the longitudinal direction D2 as described above, and the second distance L2 is a distance set from the distal end 19a of the separating film 19 in a direction opposite to the longitudinal direction D2. The region of interest R may be set to include a region, which extends from the distal end 19a of the separating film 19 to the outside of the separating film 19 by the first distance L1, and a region which extends from the distal end 19a of the separating film 19 to the inside of the separating film 19 by the second distance L2.

The first distance L1 may be set based on an exposure length h1 of the electrode tab 15a exposed from the distal end 19a of the separating film 19 to the outside of the separating film 19. The exposure length h1 of the electrode tab 15a may be a length defined in the longitudinal direction D2. For example, the first distance L1 may be set to be the same as the exposure length h1 of the electrode tab 15a so that the exposed portion of the electrode tab 15a, which is disposed at the inspection position I (see FIG. 2), is included in the region of interest R. Alternatively, considering that the electrode tab 15a may be folded or disposed to be twisted during the meandering transfer or that an extra region may be necessary during the image processing, the first distance L1 may be set to be greater than the exposure length h1 as illustrated in FIG. 5, i.e., further considering a predetermined extra distance. For example, when the exposure length h1 of the electrode tab 15a is 15 mm, the first distance L1 may be set to 15 mm to 30 mm.

The second distance L2 may be set based on the exposure length h1 of the electrode tab 15a, which is exposed from the distal end 19a of the separating film 19 to the outside of the separating film 19, and the predetermined extra distance. When the exposed portion of the electrode tab 15a is entirely folded inward to the inside of the separating film 19, the exposed portion of the electrode tab 15a may be disposed inside the separating film 19 from the distal end 19a of the separating film 19 by the exposure length h1. So as for all cases including even this case to be inspected, the second distance L2 may be set in consideration of the exposure length h1 of the electrode tab 15a. Considering the twisting of the electrode tab 15a, the extra region during the image processing, or the like, the second distance L2 may be set in consideration of both the exposure length h1 of the electrode tab 15a and the predetermined extra distance. For example, when the exposure length h1 of the electrode tab 15a is 15 mm, the second distance L2 may be set to 15 mm to 30 mm. The second distance L2 may be greater than or equal to the first distance L1.

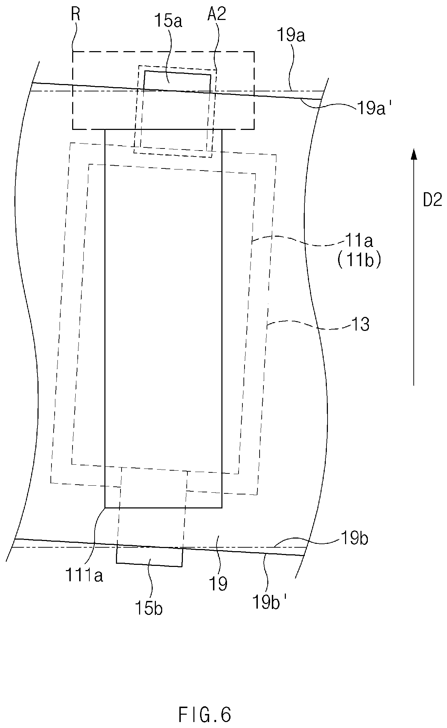

Third, the region of interest R may be set based on a region, in which the electrode tab 15a is disposed at the inspection position I during the normal transfer of the unit cell 10, and a region in which the electrode tab 15a is disposed at the inspection position I during the meandering transfer of the unit cell 10. As illustrated in FIG. 6, the separating film 19 may be transferred in a state of being twisted for several reasons during the transfer. In FIG. 6, the reference symbol 19a refers to the distal end of the separating film 19 during the normal transfer, and the reference symbol 19a' refers to the distal end of the separating film 19 during the meandering transfer. In order to inspect whether the electrode tab 15a is normal even when the position of the electrode tab 15a is changed due to this twisting, the region of interest R may be set in consideration of both a position of the electrode tab 15a (see A1 in FIG. 5) during the normal transfer and a position of the electrode tab 15a (see A2 in FIG. 6) during the meandering transfer. Accordingly, for example, even during the meandering transfer, at least a portion of the electrode tab may be included in the region of interest, and also the transfer roller may not overlap the region of interest set as above.

As illustrated in FIG. 7, the optical inspection part 130 may be configured as follows. FIG. 7 is a view specifically illustrating the optical inspection part of the inspecting apparatus in FIG. 2.

The optical inspection part 130 may include a lamp 131 configured to emit light toward a unit cell 10' to be inspected. The lamp 131 may highlight the unit cell 10' to be inspected so that the camera 133 to be described later clearly photographs the unit cell 10' to be inspected. The lamp 10 may be a backlight unit. The lamp 10 may be disposed at an upper side of the unit cell 10' to be inspected. The optical inspection part 130 may include a flat dome 137 to uniformly emit the light onto the unit cell 10' to be inspected at several angles.

The optical inspection part 130 may include the camera 133 provide to photograph the unit cell 10' to be inspected in a state in which the light is emitted by the lamp 131. The camera 133 may be a CCD camera. The camera 133 may be disposed at a lower side of the unit cell 10' to be inspected as opposed to the lamp 131. Due to this arrangement, the unit cell 10' to be inspected may be disposed between the camera 133 and the lamp 131.

The optical inspection part 130 may include a reflecting plate 135 that changes a photographing path of the camera 133 to a direction perpendicularly crossing the photographing path. The use of the reflecting plate 135 may increase a degree of freedom in position of the camera 133 and also reduce a size in a vertical direction of the inspecting apparatus.

### Embodiment 2

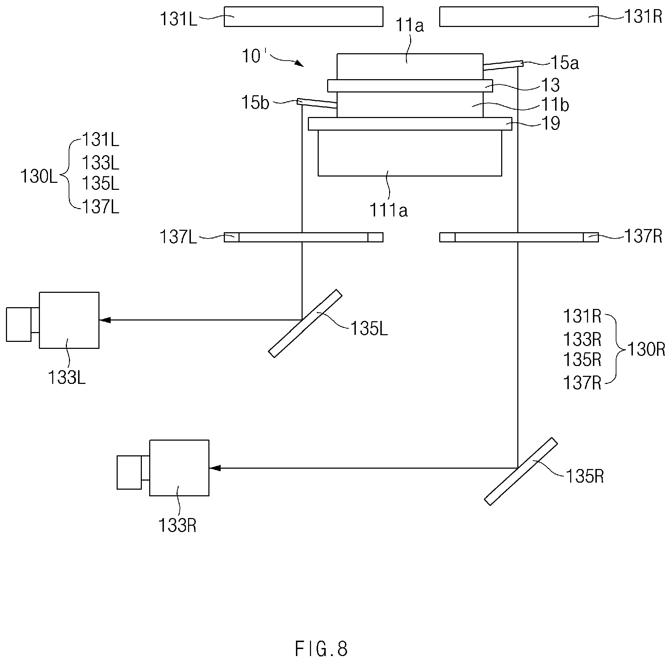

FIG. 8 is a view illustrating an apparatus for inspecting a unit cell according to Embodiment 2 of the present invention. There is a difference from the inspecting apparatus according to Embodiment 1 in that the inspecting apparatus according to Embodiment 2 is provided with two inspection parts. Hereinafter, the description of the inspecting apparatus according to Embodiment 2 will be focused on the difference as above. For reference, the same or similar matters described in Embodiment 1 may apply to Embodiment 2.

In this embodiment, electrode tabs 15a and 15b of a unit cell 10' to be inspected may include a positive electrode tab and a negative electrode tab extending from a positive electrode and a negative electrode, which are one of electrodes 11a and 11b and the other thereof, in the longitudinal direction D2 of an adjacent transfer roller 111a and a direction opposite thereto, respectively. That is, the positive electrode tab and the negative electrode tab may protrude in opposite directions.

An optical inspection part 130 according to this embodiment may include a positive electrode tab inspection part 130L for inspecting the positive electrode tab and a negative electrode tab inspection part 130R for inspecting the negative electrode tab, so as to inspect both the positive electrode tab and the negative electrode tab that protrude in the opposite directions.

The positive electrode tab inspection part 130L may optically inspect the positive electrode tab by setting, as a region of interest R, a region including a region in which at least a portion of the positive electrode tab is disposed at inspection position I. The positive electrode tab inspection part 130L may include a lamp 131L, a flat dome 137L, a reflecting plate 135L, and a camera 133L, which are the same as those described in Embodiment 1.

The negative electrode tab inspection part 130R may optically inspect the negative electrode tab by setting, as the region of interest R, a region including a region in which at least a portion of the negative electrode tab is disposed at the inspection position I. The negative electrode tab inspection part 130R may also include a lamp 131R, a flat dome 137R, a reflecting plate 135R, and a camera 133R, which are the same as those described in Embodiment 1.

The description of the present invention is intended to be illustrative, and various changes and modifications can be made by those of ordinary skill in the art to which the present invention pertains.

## Claims

1. An apparatus for inspecting a unit cell (10), the apparatus comprising:
a transfer part (110) configured to transfer a plurality of unit cells (10) and a separating film (19) in a predetermined transfer direction (D1), wherein the transfer part (110) comprises a plurality of transfer rollers (111, 111', 111a) arranged along the transfer direction (D1), wherein each of the plurality of unit cells (10) comprises an electrode (11a, 11b); and
an optical inspection part (130) configured to optically sense a unit cell (10) to be inspected that is a unit cell (10) disposed at a predetermined inspection position (I) among the plurality of unit cells (10) transferred by the transfer part (110),
wherein each of the unit cells (10) further comprises an electrode tab (15a, 15b) extending from the electrode (11a, 11b) and exposed to an outside of a separator (13) provided in each of the unit cells (10),
wherein the optical inspection part (130) is configured to set, as a region of interest (R), a region comprising a region in which at least a portion of the electrode tab (15a, 15b) is disposed at the inspection position (I),
wherein an adjacent transfer roller (111a) that is a transfer roller (111, 111', 111a) disposed adjacent to the region of interest (R) among the plurality of transfer rollers (111, 111', 111a) is disposed so as to not overlap the region of interest (R), the apparatus being **characterised in that**
the adjacent transfer roller (111a) is disposed to at least partially overlap the unit cell (10) to be inspected when the unit cell (10) to be inspected is disposed at the inspection position (I).

2. The apparatus of claim 1, wherein the region of interest (R) is set based on a region, in which the electrode tab (15a, 15b) is configured to be disposed at the inspection position (I) during a normal transfer of the unit cell (10), and a region in which the electrode tab (15a, 15b) is configured to be disposed at the inspection position (I) during a meandering transfer of the unit cell (10).

3. The apparatus of claim 1, wherein the region of interest (R) is set to comprise a region, which extends from a distal end of the separator (13), at which the electrode tab (15a, 15b) starts to be exposed when the electrode tab (15a, 15b) is disposed in a longitudinal direction (D2), which perpendicularly crosses the transfer direction (D1), of the adjacent transfer roller (111, 111', 111a), to the outside of the separator (13) by a first distance (L1) in the longitudinal direction (D2), and a region which extends from the distal end to an inside of the separator (13) by a second distance (L2) in a direction opposite to the longitudinal direction (D2).

4. The apparatus of claim 3, wherein the first distance (L1) is a length defined in the longitudinal direction (D2) and is set based on an exposure length (h1) of the electrode tab (15a, 15b) exposed from the distal end of the separator (13) to the outside of the separator (13).

5. The apparatus of claim 3, wherein the first distance (L1) is in a range of 15 mm to 30 mm.

6. The apparatus of claim 3, wherein the second distance (L2) is a length defined in the longitudinal direction (D2) and is set based on an exposure length (h1) of the electrode tab (15a, 15b) exposed from the distal end of the separator (13) to the outside of the separator (13), and a predetermined extra distance.

7. The apparatus of claim 3, wherein the second distance (L2) is in a range of 15 mm to 30 mm.

8. The apparatus of claim 3, wherein the first distance (L1) is less than or equal to the second distance (L2).

9. The apparatus of claim 1, wherein the adjacent transfer roller (111a) is provided to have a length that does not invade the region of interest (R).

10. The apparatus of claim 1, wherein the optical inspection part (130) comprises:
a lamp (10, 131, 131L, 131R) configured to emit light toward the unit cell (10) to be inspected and disposed at an upper side of the unit cell (10) to be inspected; and
a camera (133, 133L, 133R) configured to photograph the unit cell (10) to be inspected in a state in which the light is emitted by the lamp (10, 131, 131L, 131R), and disposed at a lower side of the unit cell (10) to be inspected.

11. The apparatus of claim 10, wherein the optical inspection part (130) further comprises a reflecting plate (135, 135L, 135R) configured to change a photographing path of the camera (133, 133L, 133R) to a direction perpendicularly crossing the photographing path.

12. The apparatus of claim 1, wherein the electrode tab (15a, 15b) comprises a positive electrode tab (15a, 15b) and a negative electrode tab (15a, 15b) extending from a positive electrode and a negative electrode, which are one of the electrodes (11a, 11b) and the other thereof, in a longitudinal direction (D2), which perpendicularly crosses the transfer direction (D1), of the adjacent transfer roller (111a) and a direction opposite thereto, respectively,
wherein the optical inspection part (130) comprises:
a positive electrode tab inspection part (130L) configured to optically inspect the positive electrode tab (15a, 15b) by setting, as the region of interest (R), a region comprising a region in which at least a portion of the positive electrode tab (15a, 15b) is configured to be disposed at the inspection position (I); and
a negative electrode tab inspection part (130R) configured to optically inspect the negative electrode tab (15a, 15b) by setting, as the region of interest (R), a region comprising a region in which at least a portion of the negative electrode tab (15a, 15b) is configured to be disposed at the inspection position (I).

13. The apparatus of claim 1, wherein a gap between the adjacent transfer roller (111a) and another transfer roller (111, 111', 111a) disposed immediately adjacent to the adjacent transfer roller (111a) is smaller than a width of the unit cell (10) defined in the transfer direction (D1).

## Patentansprüche

1. Vorrichtung zum Prüfen einer Einheitszelle (10), wobei die Vorrichtung umfasst:
einen Transportabschnitt (110) zum Transportieren mehrerer Einheitszellen (10) und einer Trennfolie (19) in einer vorbestimmten Transportrichtung (D1), wobei der Transportabschnitt (110) eine Vielzahl von Transportrollen (111, 111', 111a), die entlang der Transportrichtung (D1) angeordnet sind umfasst, wobei jede der mehreren Einheitszellen (10) eine Elektrode (11a, 11b) umfasst; und
ein optisches Inspektionsteil (130), das dazu konfiguriert ist, eine zu inspizierende Einheitszelle (10) optisch zu erfassen, bei der es sich um eine Einheitszelle (10) der mehreren Einheitszellen (10), die durch den Transportabschnitt (110) transportiert werden, handelt, die an einer vorbestimmten Prüfstelle (I) angeordnet ist,
wobei jede der Einheitszellen (10) ferner eine Elektrodenlasche (15a, 15b) umfasst, die sich von der Elektrode (11a, 11b) erstreckt und nach außen von einem in jeder der Einheitszellen (10) vorgesehenen Separator (13) herausragt,
wobei das optische Inspektionsteil (130) dazu konfiguriert ist, als Untersuchungsbereich (R) einen Bereich festzulegen, der einen Bereich umfasst, in dem sich zumindest ein Teil der an der Prüfstelle (I) angeordneten Elektrodenlasche (15a, 15b) befindet,
wobei eine benachbarte Transportrolle (111a), die eine der mehreren Transportrollen (111, 111', 111a) ist und benachbart zu dem Untersuchungsbereich (R) angeordnet ist, so angeordnet ist, dass sie den Untersuchungsbereich (R) nicht überlappt, wobei die Vorrichtung
**dadurch gekennzeichnet ist, dass**
die benachbarte Transportrolle (111a) so angeordnet ist, dass sie die zu prüfende Einheitszelle (10) zumindest teilweise überlappt, wenn sich die zu prüfende Einheitszelle (10) an der Prüfstelle (I) befindet.

2. Vorrichtung nach Anspruch 1, wobei der Untersuchungsbereich (R) auf der Grundlage eines Bereichs festgelegt wird, in dem die Elektrodenlasche (15a, 15b) sie während eines normalen Transports der Einheitszelle (10) an der Prüfstelle (I) angeordnet wird, und eines Bereichs, in dem die Elektrodenlasche (15a, 15b) sich bei mäanderndem Transport der Einheitszelle (10) an der Prüfstelle (I) befindet.

3. Vorrichtung nach Anspruch 1, wobei der Untersuchungsbereich (R) derart bestimmt ist, dass er einen Bereich umfasst, der sich von einem distalen Ende des Separators (13) erstreckt, an dem die Elektrodenlasche (15a, 15b) exponiert wird, wenn die Elektrodenlasche (15a, 15b) in einer senkrecht zur Transportrichtung (D1) der benachbarten Transportrolle (111, 111', 111a) verlaufenden Längsrichtung (D2) angeordnet ist, bis zur Außenseite des Separators (13) um einen ersten Abstand (L1) in Längsrichtung (D2) erstreckt, sowie einen Bereich, der sich um einen zweiten Abstand (L2) vom distalen Ende bis zur Innenseite des Separators (13) in einer zur Längsrichtung (D2) entgegengesetzten Richtung erstreckt.

4. Vorrichtung nach Anspruch 3, wobei der erste Abstand (L1) eine in Längsrichtung (D2) definierte Länge ist und auf der Grundlage einer Expositionslänge (h1) der vom distalen Ende des Separators (13) nach außen exponierten Elektrodenlasche (15a, 15b) festgelegt ist.

5. Vorrichtung nach Anspruch 3, wobei der erste Abstand (L1) in einem Bereich von 15 mm bis 30 mm liegt.

6. Vorrichtung nach Anspruch 3, wobei der zweite Abstand (L2) eine in Längsrichtung (D2) definierte Länge ist und auf der Grundlage einer Expositionslänge (h1) der Elektrodenlasche (15a, 15b), die vom distalen Ende des Separators (13) zur Außenseite des Separators (13) exponiert ist, sowie eines vorbestimmten zusätzlichen Abstands festgelegt wird.

7. Vorrichtung nach Anspruch 3, wobei der zweite Abstand (L2) in einem Bereich von 15 mm bis 30 mm liegt.

8. Vorrichtung nach Anspruch 3, wobei der erste Abstand (L1) kleiner oder gleich dem zweiten Abstand (L2) ist.

9. Vorrichtung nach Anspruch 1, wobei die benachbarte Transportrolle (111a) so ausgebildet ist, dass ihre Länge nicht in den Untersuchungsbereich (R) hineinragt.

10. Vorrichtung nach Anspruch 1, wobei das optische Inspektionsteil (130) umfasst:
eine Lampe (10, 131, 131L, 131R), zum Emittieren von Licht in Richtung der zu prüfenden Einheitszelle (10), und die an einer Oberseite der zu prüfenden Einheitszelle (10) angeordnet ist; und
eine Kamera (133, 133L, 133R) zum Fotografieren der zu prüfenden Einheitszelle (10) in einem Zustand, in dem das Licht von der Lampe (10, 131, 131L, 131R) ausgestrahlt wird, und die an einer Unterseite der zu prüfenden Einheitszelle (10) angeordnet ist.

11. Vorrichtung nach Anspruch 10, wobei das optische Inspektionsteil (130) ferner eine Reflektionsplatte (135, 135L, 135R) umfasst, die dazu konfiguriert ist, einen Aufnahmepfad der Kamera (133, 133L, 133R) in einer Richtung zu ändern, die den Aufnahmepfad senkrecht kreuzt.

12. Vorrichtung nach Anspruch 1, wobei die Elektrodenlasche (15a, 15b) eine positive Elektrodenlasche (15a, 15b) und eine negative Elektrodenlasche (15a, 15b) umfasst, die sich von einer positiven Elektrode und einer negativen Elektrode erstrecken, die die eine der Elektrode (11a, 11b) und die anderen Elektrode bilden, in einer Längsrichtung (D2), die die Transportrichtung (D1) der benachbarten Transportrolle (111a) senkrecht kreuzt, bzw. in einer dazu entgegengesetzten Richtung,
wobei das optische Inspektionsteil (130) umfasst:
ein Inspektionsteil (130L) für die positive Elektrodenlasche, das dazu ausgelegt ist die positive Elektrodenlasche (15a, 15b) optisch zu prüfen, indem es als Untersuchungsbereich (R) einen Bereich festlegt, der einen Bereich umfasst, in dem zumindest ein Teil der positiven Elektrodenlasche (15a, 15b) so angeordnet ist, dass er sich an der Prüfstelle (I) befindet; und
ein Inspektionsteil (130R) für die negative Elektrodenlasche, das dazu ausgelegt ist, die negative Elektrodenlasche (15a, 15b) optisch zu prüfen, indem es als Untersuchungsbereich (R) einen Bereich festlegt, der einen Bereich umfasst, in dem zumindest ein Teil der negative Elektrodenlasche (15a, 15b) so angeordnet ist, dass er sich an der Prüfstelle (I) befindet.

13. Vorrichtung nach Anspruch 1, wobei ein Spalt zwischen der benachbarten Transportrolle (111a) und einer weiteren Transportrolle (111, 111', 111a), die unmittelbar neben der benachbarten Transportrolle (111a) angeordnet ist, kleiner ist als eine Breite der in Transportrichtung (D1) definierten Einheitszelle (10).

## Revendications

1. Appareil d'inspection d'une cellule unitaire (10), l'appareil comprenant :
une partie transfert (110) configurée pour transférer une pluralité de cellules unitaires (10) et un film de séparation (19) dans une direction de transfert prédéterminée (D1), dans lequel la partie transfert (110) comprend une pluralité de rouleaux de transfert (111, 111', 111a) agencés le long de la direction de transfert (D1), dans lequel chaque cellule de la pluralité de cellules unitaires (10) comprend une électrode (11a, 11b) ; et
une partie inspection optique (130) configurée pour détecter optiquement une cellule unitaire (10) à inspecter laquelle est une cellule unitaire (10) disposée à une position d'inspection prédéterminée (I) parmi la pluralité de cellules unitaires (10) transférées par la partie transfert (110),
dans lequel chaque cellule des cellules unitaires (10) comprend en outre une languette d'électrode (15a, 15b) s'étendant depuis l'électrode (11a, 11b) et exposée vers un extérieur d'un séparateur (13) fourni dans chaque cellule des cellules unitaires (10),
dans lequel la partie inspection optique (130) est configurée pour définir comme région d'intérêt (R), une région comprenant une région dans laquelle au moins une partie de la languette d'électrode (15a, 15b) est disposée à la position d'inspection (I),
dans lequel un rouleau de transfert adjacent (111a) qui est un rouleau de transfert (111, 111', 111a) disposé adjacent à la région d'intérêt (R) parmi la pluralité de rouleaux de transfert (111, 111', 111a) est disposé de façon à ne pas chevaucher la région d'intérêt (R),
l'appareil étant **caractérisé en ce que**
le rouleau de transfert adjacent (111a) est disposé pour chevaucher au moins partialement la cellule unitaire (10) à inspecter quand la cellule unitaire (10) à inspecter est disposée à la position d'inspection (I).

2. Appareil selon la revendication 1, dans lequel la région d'intérêt (R) est définie sur la base d'une région dans laquelle la languette d'électrode (15a, 15b) est configurée pour être disposée à la position d'inspection (I) pendant un transfert normal de la cellule unitaire (10) et d'une région dans laquelle la languette d'électrode (15a, 15b) est configurée pour être disposée à la position d'inspection (I) pendant un transfert sinueux de la cellule unitaire (10).

3. Appareil selon la revendication 1, dans lequel la région d'intérêt (R) est définie pour comprendre une région qui s'étend depuis une extrémité distale du séparateur (13) à laquelle la languette d'électrode (15a, 15b) commence à être exposée quand la languette d'électrode (15a, 15b) est disposée dans une direction longitudinale (D2) qui croise perpendiculairement la direction de transfert (D1) du rouleau de transfert adjacent (111, 111', 111a) à l'extérieur du séparateur (13) d'une première distance (L1) dans la direction longitudinale (D2) et une région qui s'étend depuis une extrémité distale jusqu'à un intérieur du séparateur (13) d'une deuxième distance (L2) dans une direction opposée à la direction longitudinale (D2).

4. Appareil selon la revendication 3, dans lequel la première distance (L1) est une longueur définie dans la direction longitudinale (D2) et est définie sur la base d'une longueur d'exposition (h1) de la languette d'électrode (15a, 15b) exposée depuis l'extrémité distale du séparateur (13) jusqu'à l'extérieur du séparateur (13).

5. Appareil selon la revendication 3, dans lequel la première distance (L1) est dans une plage de 15 mm à 30 mm.

6. Appareil selon la revendication 3, dans lequel la deuxième distance (L2) est une longueur définie dans la direction longitudinale (D2) et est définie sur la base d'une longueur d'exposition (h1) de la languette d'électrode (15a, 15b) exposée depuis une extrémité distale du séparateur (13) jusqu'à l'extérieur du séparateur (13), et d'une distance supplémentaire prédéterminée.

7. Appareil selon la revendication 3, dans lequel la deuxième distance (L2) est dans une plage de 15 mm à 30 mm.

8. Appareil selon la revendication 3, dans lequel la première distance (L1) est inférieure ou égale à la deuxième distance (L2).

9. Appareil selon la revendication 1, dans lequel le rouleau de transfert adjacent (111a) est fourni pour avoir une longueur qui n'envahit pas la région d'intérêt (R).

10. Appareil selon la revendication 1, dans lequel la partie inspection optique (130) comprend :
une lampe (10, 131, 131L, 131R) configurée pour émettre de la lumière vers la cellule unitaire (10) à inspecter et disposée à une partie supérieure de la cellule unitaire (10) à inspecter ; et
une caméra (133, 133L, 133R) configurée pour photographier la cellule unitaire (10) à inspecter dans un état dans lequel la lumière est émise par la lampe (10, 131, 131L, 131R), et disposée à une partie inférieure de la cellule unitaire (10) à inspecter.

11. Appareil selon la revendication 10, dans lequel la partie inspection optique (130) comprend en outre une plaque réfléchissante (135, 135L, 135R) configurée pour changer un trajet de prise de vue de la caméra (133, 133L, 133R) en une direction croisant perpendiculairement le trajet de prise de vue.

12. Appareil selon la revendication 1, dans lequel la languette d'électrode (15a, 15b) comprend une languette d'électrode positive (15a, 15b) et une languette d'électrode négative (15a, 15b) s'étendant depuis une électrode positive et une électrode négative, qui sont l'une des électrodes (11a, 11b) et l'autre des électrodes, dans une direction longitudinale (D2) qui croise perpendiculairement la direction de transfert (D1) du rouleau de transfert adjacent (111a) et une direction opposée à celle-ci, respectivement,
dans lequel la partie inspection optique (130) comprend :
une partie inspection de languette d'électrode positive (130L) configurée pour inspecter optiquement la languette d'électrode positive (15a, 15b) en définissant comme région d'intérêt (R), une région comprenant une région dans laquelle au moins une partie de la languette d'électrode positive (15a, 15b) est configurée pour être disposée à la position d'inspection (I) ; et
une partie inspection de languette d'électrode négative (130R) configurée pour inspecter optiquement la languette d'électrode négative (15a, 15b) en définissant comme région d'intérêt (R), une région comprenant une région dans laquelle au moins une partie de la languette d'électrode négative (15a, 15b) est configurée pour être disposée à la position d'inspection (I).

13. Appareil selon la revendication 1, dans lequel un espace entre le rouleau de transfert adjacent (111a) et un autre rouleau de transfert (111, 111', 111a) disposé immédiatement adjacent au rouleau de transfert adjacent (111a) est inférieur à une largeur de la cellule unitaire (10) définie dans la direction de transfert (D1).
